# EUROPEAN PATENT APPLICATION

(11) **EP 0 634 582 A1**
(43) Date of publication of application: **18.01.1995**
(21) Application number: 94870119.8
(22) Date of filing: 12.07.1994
(51) Int. Cl.: F16B 19/10

(54) **Blind riveted bolt**

(30) Priority: 12.07.1993 BE 9300719
(71) Applicant: ETABLISSEMENTS DEJOND Naamloze Vennootschap, B-2610 Wilrijk (Antwerpen) (BE)
(72) Inventor: Reul, Arthur, B-2630 Aartselaar (BE)
(74) Representative: Pieraerts, Jacques

(57) **Abstract**

The blind riveted bolt according to the invention comprises a bolt (1) provided with a screw thread extending upto the head (2) thereof, and a sleeve (4) screwed onto this bolt (1) and comprising a collar (3) and a deformation cavity arranged for being deformed upon exerting a pulling force thereon in the longitudinal direction.
The abstract refers to the annexed Figure.

## Description

The present invention relates to a blind riveted bolt.

Blind riveted bolts are known and a clear example thereof is given in German Gebrauchsmuster 7335070. Blind riveted bolts according to said Gebrauchsmuster consist of a threaded bolt having a cylindrical sleeve slid thereover and connected to the bolt by spot welding. The sleeve which slides over the bolt has no screw thread and is destined to be deformed by an axial pulling force exerted onto the bolt.

The wall thickness of the sleeve is the same over its entire length. Producing a spot weld deforms and weakens the wall of the sleeve. These properties result in a weak connection between the bolt and the sleeve and this more particularly when the bolt is loaded axially.

Due to the weak fixation and the shape of the sleeve (cylindrical) the fastener made therefrom has a small moment of torque.

Another drawback of such blind riveted bolts is that they cannot or are at least very difficult to be rendered water or gas tight.

Further, EP-A1-0406801 discloses a blind riveted bolt consisting of a pin and a sleeve forming a deformation cavity. Both of these components are connected by spot welding.

This indicates that these components are made from steel which also implies that in most of the cases they have to be provided in an electrolytic bath with a protective layer.

A blind riveted bolt assembled in this way offers different drawbacks.

The spot weld connection is not only a relatively weak connection but such a spot welding operation produces an area between pin and sleeve which cannot be reached by the electrolytic solution. Further, due to the fact that the electrolytic solution cannot be circulated between pin and sleeve, too large areas cannot be protected by galvanization.

Just because of the fact that the components are made from steel, the unprotected areas will rust considerably. Connections made by the use of such blind riveted bolts are not or at least insufficiently reliable, on the one hand, due to the weaker spot weld connections and, on the other hand, due to the inevitable rust formation as a result of the adverse situation set forth hereinabove.

An object of the present invention is to develop a blind riveted bolt which does not show the hereinabove mentioned drawbacks and which allows, thanks to its concept, a prior complete electrolytic protection of its components.

In order to achieve this object, the blind riveted bolt according to the invention comprises a bolt provided with a screw-thread extending upto the head thereof, and a sleeve screwed onto this bolt and comprising a collar and a deformation cavity arranged for being deformed upon exerting a pulling force thereon in the longitudinal direction.

A remarkable feature of this blind riveted bolt consists in that said sleeve has an anti-rotation profile on the outside, such as for example a hexagonal or a notched profile, and, on the inside, a deformation cavity for producing the attachments and an inner screw threaded portion.

In a possibly embodiment, a seal is arranged between said head of said bolt and said sleeve.

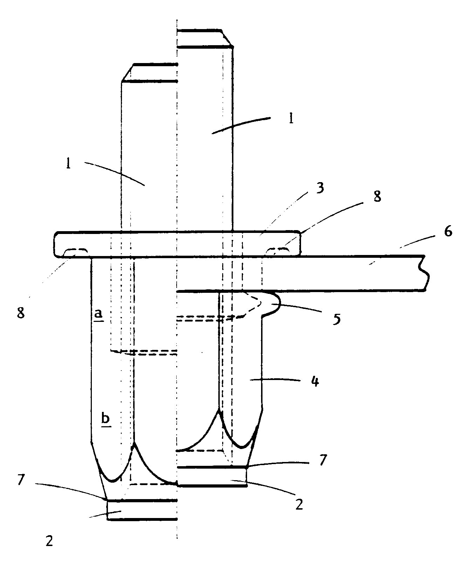

Other details and advantages of the invention will become apparent from the following description of a blind riveted bolt according to the invention. This description is only given by way of example and does not limit the invention. The reference numerals relate to the figure annexed hereto.

This single figure is a side elevational view of a blind riveted bolt according to the invention represented in two different positions.

The blind riveted bolt shown in this figure consists of a bolt 1 threaded over its entire length and having a head 2 and a collar 3. The expression "over the entire length" is used to indicate the useful length of the bolt. In each case, the outer screw thread of the bolt 1 extends upto the head 2 thereof.

A sleeve 4 is screwed over this bolt upto the head 2 of the bolt 1.

Of course, the portion of the sleeve 4 which has to be deformed into a flange 5 as it is usual for riveted bolts and the like, comprises no screw thread and forms the deformation cavity having a wall thickness (a) over the portion which has to be deformed by an axial pulling force which is smaller than the thickness (b) on the screw thread portion of the sleeve 4. The deformation cavity corresponds therefore to this thinner wall portion of the sleeve 4.

In the right hand portion of the figure, a plate 6 is shown clamped between the collar 3 and the formed flange 5.

The advantages of the blind riveted bolt according to the invention are very clear and can be summarized as follows :
a) Due to a prior electrolytic protection of both constituent parts of the blind riveted bolt, a local, more or less considerable formation of rust has not the be feared of.
b) Depending on the shape of the deformable sleeve (for example hexagonal), a very high rotational resistance of this fixation is achieved after being assembled. Especially when the component mounted onto the fitted blind riveted bolt has to be screwed off, this rotational resistance is of utmost importance (for example in case of a damaged or corroded bolt or nut).
c) The entire radial and axial contact surface between the sleeve 2 and the bolt 1 over the threaded portions, increases the load resistance of the produced connection to a considerable extent. In case of the blind riveted bolts known hitherto, this contact between the sleeve and the bolt is restricted to the welded spots. In case of an axial load, the connection made through the use of the blind riveted bolt according to the invention shows a considerably increased resistance to exaggerated deformation and to breaking.
d) Due to the elimination of the welded spots it is now possible to provide a seal between the head 2 of the bolt 1 and the head 7 of the sleeve 4. The notion "seal" includes also the notion "gluing". The contact surface between bolt and sleeve is purely flat so that no account has to be taken with deformations due to the spot welding, as a result of which water and gas tight constructions can be achieved. On this side of said collar 3, which engages in the assembled position a plate 6 or the like, a recess 8 is provided for receiving a seal which is not shown in the figure. The contact surface between the head 3 of the sleeve 4 and the plate 6 remains pure so that the seal has only a sealing function.

The invention is not limited to the hereabove described embodiment and many modifications could be applied thereto in as far as they fall within the scope of the appended claims.

## Claims

1. A blind riveted bolt, characterized in that it comprises a bolt (1) provided with a screw thread extending upto the head (2) thereof, and a sleeve (4) screwed onto this bolt (1) and comprising a collar (3) and a deformation cavity arranged for being deformed upon exerting a pulling force thereon in the longitudinal direction.

2. A blind riveted bolt according to claim 1, characterized in that said sleeve (4) has an anti-rotation profile on the outside, such as for example a hexagonal or a notched profile, and, on the inside, a deformation cavity for producing the attachments and an inner screw threaded portion.

3. A blind riveted bolt according to either one of the claims 1 and 2, characterized in that a seal is arranged between said head (2) of said bolt (1) and said sleeve (4).

4. A blind riveted bolt according to any one of the claims 1 to 3, characterized in that said collar is provided, on its side engaging a plate or the like, with a recess (8) for receiving a seal in the assembled position .

5. A blind riveted bolt according to any one of the claims 1 to 4, characterized in that the components thereof such as the sleeve and the bolt are made from a metal or a combination of metals comprising aluminium, steel, messing, stainless steel, said components being not necessarily made from the same metal.
